# EUROPÄISCHE PATENTSCHRIFT

(11) **EP 1 593 878 B1**
(45) Veröffentlichungstag und Bekanntmachung des Hinweises auf die Patenterteilung: **05.10.2011**
(21) Anmeldenummer: 04101931.6
(22) Anmeldetag: 05.05.2004
(51) Int. Cl.: F16H 7/14

(54) **System mit Trum und einer durch diesen Trum angetriebenen Pümpe Verfahren zum Spannen eines Trums**
Endless member system and thereby driven pump and method to tension the endless member
Dispositif de lien sans fin et et pompe entraînée par ce dispostif et procédé de mise en tension d'un lien sans fin

(43) Veröffentlichungstag der Anmeldung: 09.11.2005
(73) Patentinhaber: Ford Global Technologies, LLC, A subsidary of Ford Motor Company, Dearborn, MI 48126 (US)
(72) Erfinder: Figura, Michael Georg, 41542, Dormagen (DE); Kluge, Torsten, 51491, Overath (DE)
(74) Vertreter: Drömer, Hans-Carsten

(56) Entgegenhaltungen:
- DE-A- 3 619 577
- US-A- 1 374 884
- US-A- 2 894 051
- US-A- 3 132 596
- US-A- 3 187 674
- US-A- 4 241 614
- PATENT ABSTRACTS OF JAPAN Bd. 0183, Nr. 25 (M-1625), 21. Juni 1994 (1994-06-21) & JP 6 074308 A (NIPPONDENSO CO LTD), 15. März 1994 (1994-03-15)

## Beschreibung

Die Erfindung betrifft ein System umfassend einen Trum eines Antriebsmittels und eine durch diesen Trum angetriebene Pumpe, insbesondere zur Verwendung in einer Brennkraftmaschine, wobei der Trum sich mit einem Antriebsrad der anzutreibenden Pumpe in Eingriff befindet, diese Pumpe um eine Drehachse drehbar, d. h. in Richtung Trum verschwenkbar gelagert ist und mindestens ein Spannmittel vorgesehen ist, welches die Pumpe mit einem Drehmoment um ihre Drehachse in der Art beaufschlagt, dass die Pumpe in Richtung Trum gedrückt wird, wodurch der Trum gespannt wird.

Des Weiteren betrifft die Erfindung ein Verfahren zum Spannen eines Trums eines Antriebsmittels, welches eine Pumpe, insbesondere eine Pumpe einer Brennkraftmaschine, antreibt, wobei die Pumpe um eine Drehachse drehbar gelagert wird, und mindestens ein Spannmittel vorgesehen wird, welches die Pumpe mit einem Drehmoment um ihre Drehachse in der Art beaufschlagt, dass die Pumpe in Richtung Trum gedrückt wird, wodurch der Trum gespannt wird.

Ein System der oben genannten Art wird beispielsweise in einem Kraftfahrzeug verwendet. Dabei wird ein Teil der in der Brennkraftmaschine durch die chemische Umsetzung des Kraftstoffes gewonnenen Leistung genutzt, um die für den Betrieb der Brennkraftmaschine und des Kraftfahrzuges erforderlichen Nebenaggregate, insbesondere die Ölpumpe, die Kühlmittelpumpe, die Lichtmaschine und dergleichen anzutreiben.

Die DE3619577 wird als nächst liegenden Stand der Technik angesehen.

Die US 2 894 051 A beschreibt einen Zugmitteltrieb umfassend einen Trum eines Antriebsmittels und eine Pumpe, wobei der Trum sich mit einem Abtriebsrad der Pumpe in Eingriff befindet und die Pumpe selbst mittels Zahnradpaar von einer Kurbelwelle angetrieben wird. Die Pumpe ist um die Drehachse der sie antreibenden Kurbelwelle verschwenkbar gelagert. Es ist ein Spannmittel vorgesehen, welches die Pumpe mit einem Drehmoment um ihre Drehachse in der Art beaufschlagt, dass die Pumpe in Richtung Trum gedrückt wird, wodurch der Trum gespannt wird.

Für den Antrieb der Nebenaggregate werden in der Regel Riemenantriebe oder Kettenantriebe verwendet, wobei im Rahmen der vorliegenden Erfindung die verschiedenen Antriebsmittel - wie Riemen und Kette - zu dem allgemeinen Begriff des Antriebsmittels zusammengefaßt werden, d. h. unter den Oberbegriff Antriebsmittel subsumiert werden. Im Folgenden wird allgemeingültig nur noch auf den Trum des Antriebsmittels Bezug genommen.

Der Riemenantrieb bzw. Kettenantrieb soll dabei unter möglichst geringen Energieverlusten und mit möglichst wenig Wartungsaufwand durch Nachspannen ein großes Drehmoment von der Kurbelwelle auf die Nebenaggregate übertragen. Häufig wird dabei der Antrieb mehrerer Nebenaggregate in einem Riemen- bzw. Kettenantrieb zusammengefaßt. Um das Antriebsmittel - den Riemen bzw. die Kette - unter Spannung zu halten und damit einen möglichst sicheren und verschleißfreien Antrieb zu gewährleisten, werden an geeigneter Stelle des Antriebes sogenannte Riemen- bzw. Kettenspannvorrichtungen vorgesehen, welche das Antriebsmittel führen und quer zur Zugrichtung mit einer Kraft beaufschlagen, so daß das Antriebsmittel ständig unter Spannung steht und gehalten wird.

Dadurch, daß derartige Spannvorrichtungen vorgesehen werden, entfällt ein Nachspannen im Rahmen von Instandhaltungsmaßnahmen des Kraftfahrzeuges, beispielsweise einer Inspektion.

Der Verschleiß des Antriebsmittels ist ein kontinuierlicher Vorgang, der sich unter anderem dadurch bemerkbar macht, daß sich die Länge des Antriebsmittels kontinuierlich vergrößert. Eine Spannvorrichtung der beschriebenen Art gleicht diese verschleißbedingten Längenänderungen des Antriebsmittels während des Betriebes ständig und automatisch aus.

Nachteilig an den herkömmlichen Spannvorrichtungen nach dem Stand der Technik ist, daß diese Vorrichtungen in der Regel selbst sehr komplex und wartungsintensiv sind. Die Komplexität ergibt sich dabei in erster Linie durch die hohe Anzahl an Bauteilen, aus denen die Spannvorrichtung aufgebaut ist, und zudem aus ihrer Doppelfunktion als Spann- und Führungseinrichtung. Dabei ist es prinzipbedingt nicht einfach das Antriebsmittel zu führen und gleichzeitig mit einer Querkraft zu beaufschlagen.

Des weiteren müssen eine ausreichende Anzahl an Lagern zur Aufnahme der Spannvorrichtung im Motorraum und Befestigungsmittel zu ihrer Fixierung vorgesehen werden, was für eine weitere Zunahme der Anzahl an Systembauteilen und auch für eine Zunahme der Bauteil- und Herstellungskosten sorgt. Eine hohe Anzahl an Bauteilen führt grundsätzlich auch zu hohen Bereitstellungskosten, da sämtliche Bauteile verfügbar gemacht d.h. insbesondere verwaltet und gelagert werden müssen.

Die Montagezeit und damit die Montagekosten steigen ebenfalls mit einer zunehmenden Anzahl an Bauteilen. Mit der zunehmenden Bauteilanzahl steigt auch die Wahrscheinlichkeit, bei der Fertigung der einzelnen Bauteile und bei deren Montage Fehler zu begehen, die sich auf die spätere Funktionstüchtigkeit und Lebensdauer des Systems nachteilig auswirken.

Des Weiteren hat eine herkömmliche Spannvorrichtung und damit das gesamte System einen vergleichsweise hohen Raumbedarf. Der hohe Raumbedarf resultiert zum einen aus dem Platz, den das System an sich beansprucht, und zum anderen daher, daß die Befestigungsmittel, in der Regel Flansche, Ösen, Naben und/oder Schrauben oder dergleichen für Werkzeuge im Rahmen der Montage zugänglich sein müssen. Der hohe Raumbedarf steht aber dem Ziel der Konstrukteure, im Motorraum des Kraftfahrzeuges ein möglichst effektives, d. h. dichtes Packaging der gesamten Antriebseinheit zu realisieren, entgegen.

Vor diesem Hintergrund ist es die Aufgabe der vorliegenden Erfindung, ein System umfassend einen Trum eines Antriebsmittels und eine durch diesen Trum angetriebene Pumpe bereitzustellen, mit dem die nach dem Stand der Technik bekannten Nachteile überwunden werden, und das insbesondere kostengünstiger ist.

Eine weitere Teilaufgabe der vorliegenden Erfindung ist es, ein Verfahren zum Spannen eines Trums eines Antriebsmittels, welches eine Pumpe antreibt, aufzuzeigen.

Gelöst wird die erste Teilaufgabe durch ein System umfassend einen Trum eines Antriebsmittels und eine durch diesen Trum angetriebene Pumpe, insbesondere zur Verwendung in einer Brennkraftmaschine, wobei der Trum sich mit einem Antriebsrad der anzutreibenden Pumpe in Eingriff befindet, diese Pumpe um eine Drehachse drehbar, d.h. in Richtung Trum verschwenkbar gelagert ist und mindestens ein Spannmittel vorgesehen ist, welches die Pumpe mit einem Drehmoment um ihre Drehachse in der Art beaufschlagt, dass die Pumpe in Richtung Trum gedrückt wird, wodurch der Trum gespannt wird, und das dadurch gekennzeichnet ist, dass
- eine Drehachse eines Pumpenzahnrades der Pumpe die Drehachse bildet, um die die Pumpe verschwenkbar ist,
- die Pumpe eine Pumpe ist, welche ein Fluid von einer Niederdruckkammer zu einer Hochdruckkammer fördert, und
- das mindestens eine Spannmittel dadurch ausgebildet ist, dass die Niederdruckkammer der Pumpe auf der dem Trum zugewandten Seite und die Hochdruckkammer auf der dem Trum abgewandten Seite in der Art angeordnet wird, daß die in Betrieb befindliche Pumpe infolge der Druckdifferenz zwischen Niederdruckkammer und Hochdruckkammer mit einem Drehmoment beaufschlagt wird, welches die Pumpe in Richtung Trum drückt.

Dadurch, dass bei dem erfindungsgemäßen System die anzutreibende Pumpe nicht starr - wie nach dem Stand der Technik üblich - in einer definierten Position im Motorraum fixiert ist, sondern um eine Drehachse drehbar gelagert ist, kann die Pumpe mittels eines Spannelementes um diese Drehachse in Richtung Trum verschwenkt werden. Das Spannelement drückt gewissermaßen die Pumpe in den bzw. gegen den Trum des Antriebsmittels. Hierdurch wird das Antriebsmittel gespannt.

Wie bereits weiter oben erwähnt wurde, werden häufig mehrere Nebenaggregate, wie Lichtmaschine, Ölpumpe und dergleichen, in einem Riemen- bzw. Kettenantrieb zusammengefaßt. Erfindungsgemäß reicht es dann bereits aus, eine als Nebenaggregat dienende Pumpe drehbar zu lagern und dieses Nebenaggregat dadurch zusätzlich zu seiner eigentlichen Hauptfunktion, beispielsweise der Öl- oder Kühlmittelförderung, eine Nebenfunktion als Spannvorrichtung zu übertragen. Hierzu ist lediglich die Anordnung mindestens eines Spannelementes erforderlich, welches die Pumpe mit einem Drehmoment um ihre Drehachse beaufschlagt, so dass sie in Richtung Trum gedrückt wird.

Eine separate Spannvorrichtung, wie nach dem Stand der Technik üblich, wird entbehrlich. Mit dem Wegfall der separaten Spannvorrichtung entfallen auch die zahlreichen mit dieser Spannvorrichtung verbundenen Nachteile.

In erster Linie bedeutet dies, dass die Kosten für die Spannvorrichtung erheblich gesenkt werden. Die herkömmliche, sehr komplexe und kostenintensive Spannvorrichtung nach dem Stand der Technik wird ersetzt durch ein Spannelement und die konstruktive Maßnahme, daß ein anzutreibendes Aggregat drehbar gelagert wird.

Des Weiteren entfallen die Lager zur Aufnahme der Spannvorrichtung im Motorraum und die Befestigungsmittel zur Fixierung der Spannvorrichtung. Dadurch werden die Anzahl an Systembauteilen und damit auch die Bauteil- und Herstellungskosten weiter gesenkt. Die geringere Anzahl an Bauteilen führt auch zu einer Reduzierung der Bereitstellungskosten, d. h. der Verwaltungs- und Lagerkosten. Die Montagezeit und die Montagekosten werden ebenfalls gesenkt.

Darüber hinaus weist das erfindungsgemäße System einen vergleichsweise geringen Raumbedarf auf. Auch dies resultiert aus der Tatsache, dass die Spannvorrichtung für das Antriebsmittel des Ketten- oder Riemenantriebes unter Verwendung eines bereits vorhandenen Bauteils bzw. Aggregats ausgebildet wird. Der geringe Raumbedarf unterstützt ein effektives, d. h. dichtes Packaging der gesamten Antriebseinheit im Motorraum des Kraftfahrzeuges.

Durch das erfindungsgemäße System, welches eine anzutreibende, verschwenkbare Pumpe als Spannelement für das Spannen des Trums eines Antriebsmittels verwendet, wird somit die erste der Erfindung zugrunde liegende Aufgabe gelöst, nämlich ein System bereitzustellen, mit dem die nach dem Stand der Technik bekannten Nachteile überwunden werden, und das insbesondere kostengünstiger ist.

Erfindungsgemäß wird eine Pumpe verwendet, welche ein Fluid von einer Niederdruckkammer zu einer Hochdruckkammer fördert.

Die Vorteile dieser Pumpe als anzutreibendes Aggregat resultieren aus der vorteilhaften Realisierung des mindestens einen Spannmittels, welche durch die Verwendung einer Pumpe der genannten Art erst ermöglicht wird.

Vorteilhaft ist es nämlich, das mindestens eine Spannmittel dadurch auszubilden, dass die Niederdruckkammer der Pumpe auf der dem Trum zugewandten Seite und die Hochdruckkammer auf der dem Trum abgewandten Seite in der Art angeordnet wird, dass die in Betreib befindliche Pumpe infolge der Druckdifferenz zwischen Niederdruckkammer und Hochdruckkammer mit einem Drehmoment beaufschlagt wird, welches die Pumpe in Richtung Trum drückt.

Vorteilhaft ist dies, weil für die Ausbildung des mindestens einen Spannmittels kein zusätzliches Bauteil notwendig wird, sondern die Querkraft, mit der der Trum des Antriebsmittels beaufschlagt wird und die eine Spann- bzw. Zugkraft in Längsrichtung der Kette oder des Reimens hervorruft, durch entsprechende Anordnung der Pumpe mittels der Druckdifferenz zwischen Niederdruckkammer und Hochdruckkammer generiert wird. Die trägt zur Lösung der ersten der Erfindung zugrunde liegenden Aufgabe bei, nämlich ein System bereitzustellen, das unter anderem weniger Bauteile umfasst.

Vorteilhaft sind Ausführungsformen des Systems, bei denen das Antriebsmittel eine Kette oder ein Riemen ist. Wie bereits weiter oben ausgeführt wurde, werden herkömmliche Antriebe mit Ketten oder Riemen als Antriebsmittel ausgestattet. Bei Verwendung dieser Antriebsmittel im Zusammenhang mit dem erfindungsgemäßen System wird somit auf bewährte Antriebsmittel zurückgegriffen. Dies erleichtert die konstruktive Auslegung des erfindungsgemäßen Systems, ohne daß eine vollständige Neukonstruktion des Antriebes erforderlich ist.

Vorteilhaft sind Ausführungsformen des Systems, bei denen die Pumpe eine Ölpumpe ist, welche Öl von einer Niederdruckkammer zu einer Hochdruckkammer fördert, oder eine Kühlmittelpumpe ist, welche Kühlmittel von einer Niederdruckkammer zu einer Hochdruckkammer fördert.

Vorteilhaft sind Ausführungsformen des Systems, bei denen in der Hochdruckkammer ein vom Fluiddruck beaufschlagter Kolben angeordnet ist, der relativ zur Brennkraftmaschine ortsfest und relativ zur Pumpe beweglich angeordnet ist, wobei der Fluiddruck in der Hochdruckkammer bei einer im Betrieb befindlichen Pumpe durch Herausschieben des Kolbens aus der Hochdruckkammer die Pumpe in Richtung Trum drückt.

Diese Ausgestaltung des Systems ist eine konstruktive Möglichkeit, die Druckdifferenz für die Erzeugung einer Querkraft bzw. Spannkraft nutzbar zu machen, wobei die frei wählbare Größe der Kolbenbodenfläche einen geeigneten Parameter darstellt, über den bei einer vorgegebenen Druckdifferenz der Pumpe die erforderliche Spannkraft eingestellt werden kann. Diese Ausführungsform des Systems wird noch näher im Zusammenhang mit der Figurenbeschreibung erläutert.

Vorteilhaft sind dabei Ausführungsformen des Systems, bei denen mindestens ein zusätzliches Spannmittel vorgesehen ist, welches die außer Betrieb befindliche Pumpe in Richtung Trum drückt. Wird die Spannkraft mit Hilfe der Druckdifferenz der Pumpenkammern erzeugt, muß berücksichtigt werden, daß diese Spannkraft nur bei einer in Betrieb befindlichen Pumpe zur Verfügung steht, so daß die außer Betrieb befindliche Pumpe infolge einer dann nicht vorhandenen Druckdifferenz um ihre Drehachse frei verschwenkbar ist. Aus diesem Grunde ist es vorteilhaft ein zusätzliches Spannmittel vorzusehen, welches auch die nicht in Betrieb befindliche Pumpe mit einer ausreichend großen Kraft gegen den Trum des Antriebsmittels drückt bzw. die Pumpe mit einem genügend großen Drehmoment um ihre Drehachse in Richtung Trum dreht.

Vorteilhaft sind dabei Ausführungsformen des Systems, bei denen das mindestens eine zusätzliche Spannmittel eine Feder, vorzugsweise eine Schraubenfeder, ist.

Vorteilhaft sind insbesondere Ausführungsformen des Systems, bei denen die Pumpe in der Weise angeordnet wird, dass das Reaktionsmoment auf das Antriebsmoment die Pumpe um ihre Drehachse in der Art dreht, dass die Pumpe in Richtung Trum gedrückt wird.

Das System wird als selbstspannendes System ausgebildet, bei dem gemäß dem Prinzip von reactio gleich actio das Reaktionsmoment zum Spannen des Trums verwendet wird. Die Laufrichtung des Antriebsmittels und die Anordnung der Pumpe sind dabei in der Weise aufeinander abzustimmen, dass das Antriebsmoment, welches der Trum auf die Pumpe ausübt, ein Reaktionsmoment hervorruft, welches die Pumpe um ihre Drehachse in der Art verschwenkt, dass die Pumpe in Richtung Trum gedrückt wird. Anschaulich wird dieses Prinzip im Zusammenhang mit der Beschreibung der Figuren erläutert.

Die zweite der Erfindung zugrunde liegende Teilaufgabe wird gelöst durch ein Verfahren zum Spannen eines Trums eines Antriebsmittels, welches eine Pumpe, insbesondere eine Pumpe einer Brennkraftmaschine, antreibt, wobei die Pumpe um eine Drehachse drehbar gelagert wird, und mindestens ein Spannmittel vorgesehen wird, welches die Pumpe mit einem Drehmoment um ihre Drehachse in der Art beaufschlagt, dass die Pumpe in Richtung Trum gedrückt wird, wodurch der Trum gespannt wird, und das dadurch gekennzeichnet ist, dass
- als Drehachse eine Drehachse eines Pumpenzahnrades der Pumpe verwendet wird, um die die Pumpe verschwenkbar ist,
- als Pumpe eine Pumpe verwendet wird, welche ein Fluid von einer Niederdruckkammer zu einer Hochdruckkammer fördert, und
- das mindestens eine Spannmittel dadurch ausgebildet wird, dass die Niederdruckkammer der Pumpe auf der dem Trum zugewandten Seite und die Hochdruckkammer auf der dem Trum abgewandten Seite angeordnet wird, so dass die in Betrieb befindliche Pumpe infolge der Druckdifferenz zwischen Niederdruckkammer und Hochdruckkammer mit einem Drehmoment beaufschlagt wird und die Pumpe in Richtung Trum gedrückt wird.

Das bereits für das erfindungsgemäße System Gesagte gilt auch für das erfindungsgemäße Verfahren. Die Verwendung einer Kombination aus drehbar gelagerter Pumpe und einem Spannmittel macht eine herkömmliche Spannvorrichtung entbehrlich. Dadurch wird insbesondere die Anzahl der verwendeten Bauteile gesenkt und die Gesamtkosten, insbesondere die Herstellungskosten und die Montagekosten, reduziert.

Vorteilhaft ist die Verwendung einer Pumpe, welche ein Fluid von einer Niederdruckkammer zu einer Hochdruckkammer fördert. Die Verwendung einer derartigen Pumpe ermöglicht es, das mindestens eine Spannmittel dadurch auszubilden, dass die Niederdruckkammer der Pumpe auf der dem Trum zugewandten Seite und die Hochdruckkammer auf der dem Trum abgewandten Seite angeordnet wird, so dass die in Betrieb befindliche Pumpe infolge der Druckdifferenz zwischen Niederdruckkammer und Hochdruckkammer mit einem Drehmoment beaufschlagt wird und die Pumpe in Richtung Trum gedrückt wird.

Vorteilhaft sind aus den bereits oben genannten Gründen Verfahrenvarianten, bei denen als Antriebsmittel eine Kette oder ein Riemen verwendet wird.

Vorteilhaft sind Ausführungsformen des Verfahrens, bei denen eine Ölpumpe oder eine Kühlmittelpumpe verwendet wird.

Vorteilhaft sind Ausführungsformen des Verfahrens, bei denen in der Hochdruckkammer ein vom Fluiddruck beaufschlagter Kolben angeordnet wird, der relativ zur Brennkraftmaschine ortsfest und relativ zur Pumpe beweglich angeordnet ist, wobei mittels Fluiddruck in der Hochdruckkammer bei einer im Betrieb befindlichen Pumpe der Kolben aus der Hochdruckkammer herausgeschoben wird und die Pumpe in Richtung Trum gedrückt wird.

Vorteilhaft sind Ausführungsformen des Verfahrens, bei denen mindestens ein zusätzliches Spannmittel vorgesehen wird, durch welches die außer Betrieb befindliche Pumpe in Richtung Trum gedrückt wird, wobei vorzugsweise als zusätzliches Spannmittel eine Feder, insbesondere eine Schraubenfeder, verwendet wird.

Vorteilhaft sind dabei Ausführungsformen des Verfahrens, bei denen die Pumpe in der Weise angeordnet wird, dass das Reaktionsmoment auf das Antriebsmoment die Pumpe um ihre Drehachse in der Art dreht, dass die Pumpe in Richtung Trum gedrückt wird.

Im folgenden wird die Erfindung anhand von drei Ausführungsbeispielen gemäß den Figur 1 bis 3 näher beschrieben. Hierbei zeigt:
- Fig. 1: schematisch eine erste Ausführungsform des Systems in einer Seitenansicht und teilweise geschnitten,
- Fig. 2: schematisch eine Ausführungsform eines Spannmittels im Querschnitt, und
- Fig. 3: schematisch eine zweite Ausführungsform des Systems in einer Seitenansicht und teilweise geschnitten.

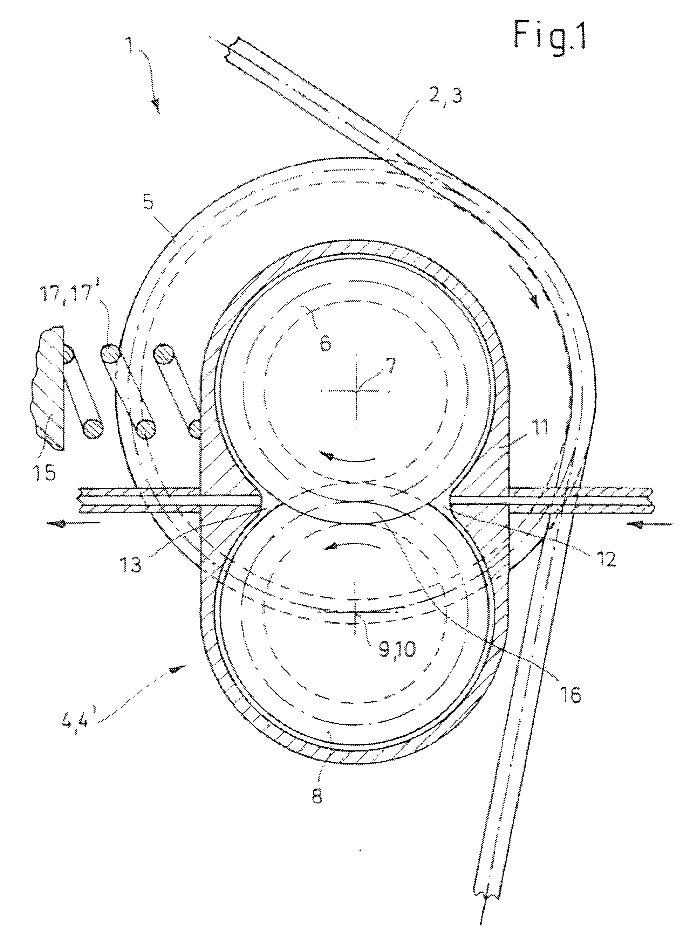

Figur 1 zeigt schematisch eine erste Ausführungsform des Systems 1 in einer Seitenansicht und teilweise geschnitten.

Das System 1 umfaßt einen Trum 2 eines Antriebsmittels 3 und ein Aggregat 4, das durch diesen Trum 2 angetrieben wird. Zum Antrieb des Aggregats 4 befindet sich der Trum 2 mit einem Antriebsrad 5 des anzutreibenden Aggregats 4 in Eingriff. Das Aggregat 4 ist um eine Drehachse 10 drehbar gelagert und damit verschwenkbar in Richtung Trum 2 angeordnet.

Die in Figur 1 dargestellte Ausführungsform ist dadurch gekennzeichnet, daß als Aggregat 4 eine Ölpumpe 4' verwendet wird, die Öl von einer Niederdruckkammer 12 zu einer Hochdruckkammer 13 fördert. Hierzu verfügt die Pumpe 4' über zwei Pumpenzahnräder 6,8, die sich gegenläufig drehen und in Eingriff miteinander befinden. Die Eingriffszone 16 ist zwischen Niederdruckkammer 12 und Hochdruckkammer 13 angeordnet, wobei das Öl in den Zahnradtaschen der sich in Eingriff befindlichen Pumpenzahnräder 6,8 von der Niederdruckkammer 12 zu der Hochdruckkammer 13 gepumpt wird. Das erste Pumpenzahnrad 6 dreht sich dabei um die Drehachse 7, auf der auch das Antriebsrad 5 der Pumpe 4' angeordnet ist. Das zweite Pumpenzahnrad 8 dreht sich um die Drehachse 9, die gleichzeitig die Drehachse 10 der Pumpe 4' bildet.

Zum Spannen des Antriebsmittels 3 muß mindestens ein Spannmittel vorgesehen werden, welches das Aggregat 4 mit einem Drehmoment um seine Drehachse 10 in der Art beaufschlagt, daß das Aggregat 4 in Richtung Trum 2 gedrückt wird. Hierdurch wird der Trum 2 gespannt.

Die in Figur 1 dargestellte Ausführungsform benötigt für die Ausbildung des mindestens einen Spannmittels kein zusätzliche Bauteil. Die Querkraft, mit der die Pumpe 4' in Richtung Trum 2 gedrückt wird und die zum Spannen des Antriebsmittels führt, wird durch entsprechende Anordnung der Pumpe 4' mittels der Druckdifferenz zwischen Niederdruckkammer 12 und Hochdruckkammer 13 generiert.

Hierzu ist die Niederdruckkammer 12 der Pumpe 4' auf der dem Trum 2 zugewandten Seite und die Hochdruckkammer 13 auf der dem Trum 2 abgewandten Seite in der Art angeordnet, daß die in Betrieb befindliche Pumpe 4' infolge der Druckdifferenz zwischen Niederdruckkammer 12 und Hochdruckkammer 13 mit einem Drehmoment um ihre Drehachse 10 beaufschlagt wird. Als Folge des sich um die Drehachse 10 einstellenden Drehmomentes wird die Pumpe 4' in Richtung Trum 2 gedrückt.

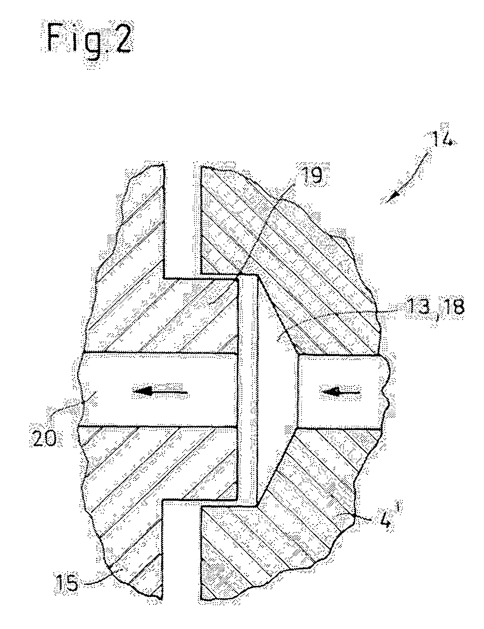

Es gibt grundsätzlich verschiedene konstruktive Möglichkeiten, die Druckdifferenz der Pumpe 4' für die Erzeugung einer Querkraft bzw. Spannkraft nutzbar zu machen. Eine Möglichkeit wir weiter unten im Rahmen der Beschreibung der Figur 2 näher erläutert.

In den Fällen, in denen die Druckdifferenz einer Pumpe 4' zur Ausbildung des Spannmittels bzw. zur Generierung der Spannkraft dient, ist es vorteilhaft mindestens ein zusätzliches Spannmittel 17 vorzusehen, welches die außer Betrieb befindliche Pumpe 4' in Richtung Trum 2 drückt. Wird nämlich die Spannkraft mit Hilfe der Druckdifferenz der Pumpenkammern 12,13 erzeugt, muß berücksichtigt werden, daß diese Spannkraft nur bei einer in Betrieb befindlichen Pumpe 4' zur Verfügung steht, so daß die außer Betrieb befindliche Pumpe 4' infolge der fehlenden Druckdifferenz um ihre Drehachse 10 frei verschwenkbar d. h. beweglich ist.

Die in Figur 1 dargestellte Ausführungsform ist hierzu mit einer Schraubenfeder 17' als zusätzlichem Spannmittel 17 ausgestattet. Diese Schraubenfeder 17' ist mit einem Ende an der Brennkraftmaschine 15 und mit dem anderen Ende an dem Gehäuse 11 der Pumpe 4' gelagert. Hierdurch wird auch die nicht in Betrieb befindliche Pumpe 4' in Richtung Trum 2 gedrückt.

Figur 2 zeigt schematisch eine Ausführungsform eines Spannmittels 14 im Querschnitt. Ein derartiges Spannmittel 14 kann beispielsweise bei der in Figur 1 dargestellten Ausführungsform des Systems 1 eingesetzt werden, die die Spannkraft mit Hilfe der Druckdifferenz der Pumpenkammern 12,13 erzeugt, weshalb im übrigen bezug genommen wird auf Figur 1. Für dieselben Bauteile wurden dieselben Bezugszeichen verwendet.

Zur Ausbildung des Spannmittels 14 wird zwischen Brennkraftmaschine 15 und Pumpe 4' eine Druckkammer 18 vorgesehen, die auch als Teil der Hochdruckkammer 13 der Pumpe 4' ausgestaltet werden kann, wie dies bei dem in Figur 2 dargestellten Spannmittel 14 der Fall ist. In dieser Druckkammer ist ein Kolben 19 vorgesehen, der relativ zur Brennkraftmaschine 15 ortsfest und relativ zur Pumpe 4' beweglich angeordnet ist, wobei der Fluiddruck - beispielsweise der Druck eines in die Hochdruckkammer 13 und die Druckkammer 18 geförderten Öls - bei einer im Betrieb befindlichen Pumpe 4' durch Herausschieben des Kolbens 19 aus der Druckkammer die Pumpe 4' in Richtung Trum 2 drückt.

Der Kolben 19 weist eine Zuleitung 20 auf, die das Öl beispielsweise in Richtung Hauptölgalerie leitet. Durch die Variation der Größe der Kolbenbodenfläche kann die erforderliche Spannkraft eingestellt werden.

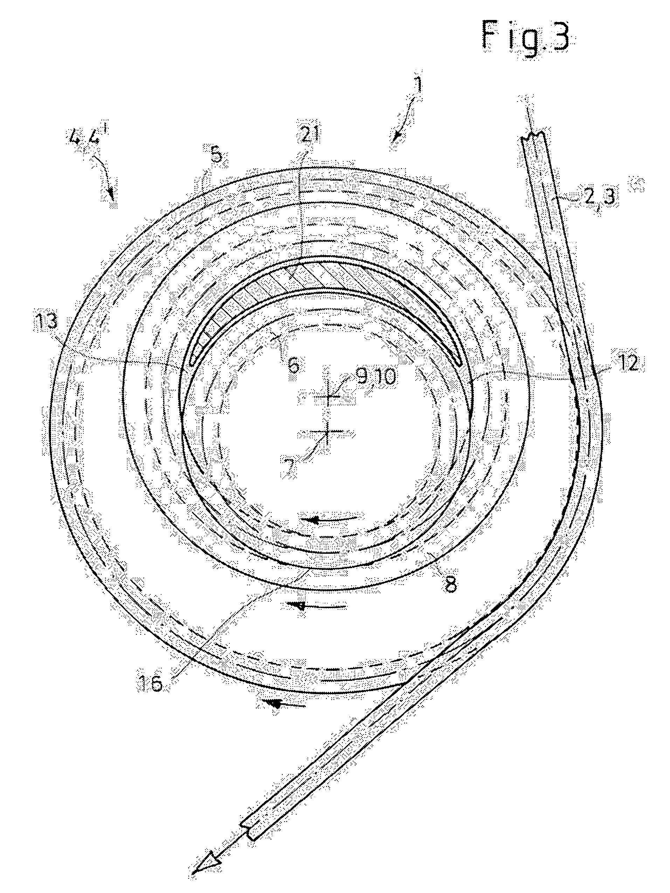

Figur 3 zeigt schematisch eine zweite Ausführungsform des Systems 1 in einer Seitenansicht und teilweise geschnitten. Im Unterschied zu der in Figur 1 dargestellten Ausführungsform verfügt diese zweite Ausführungsform über kein zusätzliches Spannmittel. Es sollen nur die Unterschiede zu der in Figur 1 dargestellten Ausführungsform erörtert werden, weshalb im übrigen bezug genommen wird auf Figur 1 und 2. Für dieselben Bauteile wurden dieselben Bezugszeichen verwendet

Die in Figur 3 dargestellte Ausführungsform des Systems 1 verwendet ebenfalls eine Ölpumpe 4' als anzutreibendes Aggregat 4. Diese Ölpumpe 4' verfügt über zwei Pumpenzahnräder 6,8, die - im Gegensatz zu der in Figur 1 dargestellten Ausführungsform - in der Art eines Planetengetriebes angeordnet sind, wobei das erste Pumpenzahnrad 6 eine Außenverzahnung aufweist und in dem zweiten Pumpenzahnrad 8, welches eine Innenverzahnung hat, angeordnet wird. Die beiden Pumpenzahnräder 6,8 drehen sich gleichsinnig, befinden sich in Eingriff miteinander und fördern Öl von einer Niederdruckkammer 12 in eine Hochdruckkammer 13 der Ölpumpe 4'. Ein Rückströmen des Öls wird durch die Anordnung einer Dichtlippe 21 verhindert.

Das erste Pumpenzahnrad 6 dreht sich um die Drehachse 7, welche auch die Drehachse für das Antriebsrad 5 darstellt, wohingegen das zweite Pumpenzahnrad 8 sich um die Drehachse 9 dreht, die gleichzeitig die Drehachse 10 des Aggregats 4 bzw. der Pumpe 4' bildet und um welche die Pumpe 4 in Richtung Trum 2 verschwenkbar ist. Bei einer in Betrieb befindlichen Pumpe 4 werden das Antriebsrad 5 und das erste Pumpenzahnrad 6 durch das sich infolge der Druckdifferenz einstellende Drehmoment um die Achse 9 des zweiten Pumpenzahnrades 8 gedreht und zu dem Trum 2 des Antriebsmittels 3 hin gedrückt.

Dabei ist die Pumpe 4 in der Weise angeordnet, daß das Reaktionsmoment auf das Antriebsmoment die Pumpe 4 um ihre Drehachse 10 in der Art dreht, daß sie in Richtung Trum 2 gedrückt wird, wodurch das Spannen des Trums 2 unterstützt und gefördert wird.

### Bezugszeichen

- 1: System
- 2: Trum
- 3: Antriebsmittel
- 4: Aggregat
- 4': Pumpe, Ölpumpe
- 5: Antriebsrad
- 6: erstes Pumpenzahnrad
- 7: Drehachse des ersten Pumpenzahnrades
- 8: zweites Pumpenzahnrad
- 9: Drehachse des zweiten Pumpenzahnrades
- 10: Drehachse des Aggregats
- 11: Gehäuse
- 12: Niederdruckkammer
- 13: Hochdruckkammer
- 14: Spannmittel
- 14': Schraubenfeder
- 15: Brennkraftmaschine
- 16: Eingriffszone
- 17: zusätzliches Spannmittel
- 17': Feder, Schraubenfeder
- 18: Druckkammer
- 19: Kolben
- 20: Zuleitung

- →: Förderrichtung

## Patentansprüche

1. System (1) umfassend einen Trum (2) eines Antriebsmittels (3) und eine durch diesen Trum (2) angetriebene Pumpe (4'), insbesondere zur Verwendung in einer Brennkraftmaschine (15), wobei der Trum (2) sich mit einem Antriebsrad (5) der anzutreibenden Pumpe (4') in Eingriff befindet, diese Pumpe (4') um eine Drehachse (10) drehbar, d.h. in Richtung Trum (2) verschwenkbar gelagert ist und mindestens ein Spannmittel (14) vorgesehen ist, welches die Pumpe (4') mit einem Drehmoment um ihre Drehachse (10) in der Art beaufschlagt, dass die Pumpe (4') in Richtung Trum (2) gedrückt wird, wodurch der Trum (2) gespannt wird, die Pumpe (4') eine Pumpe (4') ist, welche ein Fluid von einer Niederdruckkammer (12) zu einer Hochdruckkammer (13) fördert,
**dadurch gekennzeichnet, dass**
- eine Drehachse (9) eines Pumpenzahnrades (8) der Pumpe (4') die Drehachse (10) bildet, um die die Pumpe (4') verschwenkbar ist, und
- das mindestens eine Spannmittel (14) **dadurch** ausgebildet ist, dass die Niederdruckkammer (12) der Pumpe (4') auf der dem Trum (2) zugewandten Seite und die Hochdruckkammer (13) auf der dem Trum (2) abgewandten Seite in der Art angeordnet wird, dass die in Betrieb befindliche Pumpe (4') infolge der Druckdifferenz zwischen Niederdruckkammer (12) und Hochdruckkammer (13) mit einem Drehmoment beaufschlagt wird, welches die Pumpe (4') in Richtung Trum (2) drückt.

2. System (1) nach Anspruch 1,
**dadurch gekennzeichnet, dass**
das Antriebsmittel (3) eine Kette ist.

3. System (1) nach Anspruch 1,
**dadurch gekennzeichnet, dass**
das Antriebsmittel (3) ein Riemen ist.

4. System (1) nach einem der vorherigen Ansprüche,
**dadurch gekennzeichnet, dass**
die Pumpe (4') eine Ölpumpe (4') ist, welche Öl von der Niederdruckkammer (12) zu der Hochdruckkammer (13) fördert.

5. System (1) nach einem der Ansprüche 1 bis 3,
**dadurch gekennzeichnet, dass**
die Pumpe (4') eine Kühlmittelpumpe ist, welche Kühlmittel von der Niederdruckkammer (12) zu der Hochdruckkammer (13) fördert.

6. System (1) nach einem der vorherigen Ansprüche,
**dadurch gekennzeichnet, dass**
in der Hochdruckkammer (13) ein vom Fluiddruck beaufschlagter Kolben (19) angeordnet ist, der relativ zur Brennkraftmaschine (15) ortsfest und relativ zur Pumpe (4') beweglich angeordnet ist, wobei der Fluiddruck in der Hochdruckkammer (13) bei einer im Betreib befindlichen Pumpe (4') durch Herausschieben des Kolbens (19) aus der Hochdruckkammer (13) die Pumpe (4') in Richtung Trum (2) drückt.

7. System (1) nach einem der vorherigen Ansprüche,
**dadurch gekennzeichnet, dass**
mindestens ein zusätzliches Spannmittel (17) vorgesehen ist, welches die außer Betrieb befindliche Pumpe (4') in Richtung Trum (2) drückt.

8. System (1) nach Anspruch 7,
**dadurch gekennzeichnet, dass**
das mindestens eine zusätzliche Spannmittel (17) eine Feder (17') ist.

9. System (1) nach Anspruch 8,
**dadurch gekennzeichnet, dass**
das mindestens eine zusätzliche Spannmittel (17) eine Schraubenfeder (17') ist.

10. System (1) nach einem der vorherigen Ansprüche,
**dadurch gekennzeichnet, dass**
die Pumpe (4') in der Weise angeordnet wird, dass das Reaktionsmoment auf das Antriebsmoment die Pumpe (4') um ihre Drehachse (10) in der Art dreht, dass die Pumpe (4') in Richtung Trum (2) gedrückt wird.

11. Verfahren zum Spannen eines Trums (2) eines Antriebsmittels (3), welches eine Pumpe (4'), insbesondere eine Pumpe (4') einer Brennkraftmaschine (15), antreibt, wobei die Pumpe (4') um eine Drehachse (10) drehbar gelagert wird, und mindestens ein Spannmittel (14) vorgesehen wird, welches die Pumpe (4') mit einem Drehmoment um ihre Drehachse (10) in der Art beaufschlagt, dass die Pumpe (4') in Richtung Trum (2) gedrückt wird, wodurch der Trum (2) gespannt wird, als Pumpe (4') eine Pumpe (4') verwendet wird, welche ein Fluid von einer Niederdruckkammer (12) zu einer Hochdruckkammer (13) fördert,
**dadurch gekennzeichnet, dass**
- als Drehachse (10) eine Drehachse (9) eines Pumpenzahnrades (8) der Pumpe (4') verwendet wird, um die die Pumpe (4') verschwenkbar ist, und
- das mindestens eine Spannmittel (14) **dadurch** ausgebildet wird, dass die Niederdruckkammer (12) der Pumpe (4') auf der dem Trum (2) zugewandten Seite und die Hochdruckkammer (13) auf der dem Trum (2) abgewandten Seite angeordnet wird, so dass die in Betrieb befindliche Pumpe (4') infolge der Druckdifferenz zwischen Niederdruckkammer (12) und Hochdruckkammer (13) mit einem Drehmoment beaufschlagt wird und die Pumpe (4') in Richtung Trum (2) gedrückt wird.

12. Verfahren nach Anspruch 11,
**dadurch gekennzeichnet, dass**
als Antriebsmittel (3) eine Kette verwendet wird.

13. Verfahren nach Anspruch 11,
**dadurch gekennzeichnet, dass**
als Antriebsmittel (3) ein Riemen verwendet wird.

14. Verfahren nach einem der Ansprüche 11 bis 13,
**dadurch gekennzeichnet, dass**
als Pumpe (4') eine Ölpumpe (4') verwendet wird.

15. Verfahren nach einem der Ansprüche 11 bis 13,
**dadurch gekennzeichnet, dass**
als Pumpe (4') eine Kühlmittelpumpe verwendet wird.

16. Verfahren nach einem der Ansprüche 11 bis 15,
**dadurch gekennzeichnet, dass**
in der Hochdruckkammer (13) ein vom Fluiddruck beaufschlagter Kolben (19) angeordnet wird, der relativ zur Brennkraftmaschine (15) ortsfest und relativ zur Pumpe (4') beweglich angeordnet ist, wobei mittels Fluiddruck in der Hochdruckkammer (13) bei einer im Betreib befindlichen Pumpe (4') der Kolben (19) aus der Hochdruckkammer (13) herausgeschoben wird und die Pumpe (4') in Richtung Trum (2) gedrückt wird.

17. Verfahren nach einem der Ansprüche 11 bis 16,
**dadurch gekennzeichnet, dass**
mindestens ein zusätzliches Spannmittel (17) vorgesehen wird, durch welches die außer Betrieb befindliche Pumpe (4') in Richtung Trum (2) gedrückt wird.

18. Verfahren nach Anspruch 17,
**dadurch gekennzeichnet, dass**
als zusätzliches Spannmittel (17) eine Feder (17') verwendet wird.

19. Verfahren nach Anspruch 18,
**dadurch gekennzeichnet, dass**
als zusätzliches Spannmittel (17) eine Schraubenfeder (17') verwendet wird.

20. Verfahren nach einem der Ansprüche 11 bis 19,
**dadurch gekennzeichnet, dass**
die Pumpe (4') in der Weise angeordnet wird, dass das Reaktionsmoment auf das Antriebsmoment die Pumpe (4') um ihre Drehachse (10) in der Art dreht, dass die Pumpe (4') in Richtung Trum (2) gedrückt wird.

## Claims

1. System (1) comprising a run (2) of a drive means (3) and a pump (4') which is driven by the said run (2), in particular for use in an internal combustion engine (15), the run (2) being in engagement with a drive wheel (5) of the pump (4') to be driven, the said pump (4') being mounted such that it can be rotated about a rotational axis (10), that is to say can be pivoted in the direction of the run (2), and at least one tensioning means (14) being provided which loads the pump (4') with a torque about its rotational axis (10) in such a way that the pump (4') is pressed in the direction of the run (2), as a result of which the run (2) is tensioned, the pump (4') being a pump (4') which conveys a fluid from a low-pressure chamber (12) to a high-pressure chamber (13), **characterized in that**
- a rotational axis (9) of a pump gearwheel (8) of the pump (4') forms the rotational axis (10), about which the pump (4') can be pivoted, and
- the at least one tensioning means (14) is configured by the fact that the low-pressure chamber (12) of the pump (4') is arranged on the side which faces the run (2) and the high-pressure chamber (13) is arranged on the side which faces away from the run (2), in such a way that the pump (4') which is in operation is loaded with a torque as a consequence of the pressure difference between the low-pressure chamber (12) and the high-pressure chamber (13), which torque presses the pump (4') in the direction of the run (2).

2. System (1) according to Claim 1, **characterized in that** the drive means (3) is a chain.

3. System (1) according to Claim 1, **characterized in that** the drive means (3) is a belt.

4. System (1) according to one of the preceding claims, **characterized in that** the pump (4') is an oil pump (4') which conveys oil from the low-pressure chamber (12) to the high-pressure chamber (13).

5. System (1) according to one of Claims 1 to 3, **characterized in that** the pump (4') is a coolant pump which conveys coolant from the low-pressure chamber (12) to the high-pressure chamber (13).

6. System (1) according to one of the preceding claims, **characterized in that** a piston (19) which is loaded by the fluid pressure and is arranged such that it is stationary relative to the internal combustion engine (15) and can be moved relative to the pump (4') is arranged in the high-pressure chamber (13), the fluid pressure in the high-pressure chamber (13) pressing the pump (4') in the direction of the run (2) by the piston (19) being pushed out of the high-pressure chamber (13), in the case of a pump (4') which is in operation.

7. System (1) according to one of the preceding claims, **characterized in that** at least one additional tensioning means (17) is provided which presses the pump (4') which is not in operation in the direction of the run (2).

8. System (1) according to Claim 7, **characterized in that** the at least one additional tensioning means (17) is a spring (17').

9. System (1) according to Claim 8, **characterized in that** the at least one additional tensioning means (17) is a helical spring (17').

10. System (1) according to one of the preceding claims, **characterized in that** the pump (4') is arranged in such a way that the reaction moment to the drive moment rotates the pump (4') about its rotational axis (10) in such a way that the pump (4') is pressed in the direction of the run (2).

11. Method for tensioning a run (2) of a drive means (3) which drives a pump (4'), in particular a pump (4') of an internal combustion engine (15), the pump (4') being mounted such that it can be rotated about a rotational axis (10), and at least one tensioning means (14) being provided which loads the pump (4') with a torque about its rotational axis (10) such that the pump (4') is pressed in the direction of the run (2), as a result of which the run (2) is tensioned, a pump (4') being used as a pump (4'), which conveys a fluid from a low-pressure chamber (12) to a high-pressure chamber (13),
**characterized in that**
- a rotational axis (9) of a pump gearwheel (8) of the pump (4') is used as the rotational axis (10), around which rotational axis (9) the pump (4') can be pivoted, and
- the at least one tensioning means (14) is configured by virtue of the fact that the low-pressure chamber (12) of the pump (4') is arranged on the side which faces the run (2) and the high-pressure chamber (13) is arranged on the side which faces away from the run (2), with the result that the pump (4') which is in operation is loaded with a torque as a consequence of the pressure difference between the low-pressure chamber (12) and the high-pressure chamber (13), and the pump (4') is pressed in the direction of the run (2).

12. Method according to Claim 11, **characterized in that** a chain is used as drive means (3).

13. Method according to Claim 11, **characterized in that** a belt is used as drive means (3).

14. Method according to one of Claims 11 to 13, **characterized in that** an oil pump (4') is used as pump (4').

15. Method according to one of Claims 11 to 13, **characterized in that** a coolant pump is used as pump (4').

16. Method according to one of Claims 11 to 15, **characterized in that** a piston (19) which is loaded by the fluid pressure and is arranged such that it is stationary relative to the internal combustion engine (15) and can be moved relative to the pump (4') is arranged in the high-pressure chamber (13), the piston (19) being pushed out of the high-pressure chamber (13) and the pump (4') being pressed in the direction of the run (2) by means of fluid pressure in the high-pressure chamber (13), in the case of a pump (4') which is in operation.

17. Method according to one of Claims 11 to 16, **characterized in that** at least one additional tensioning means (17) is provided, by which the pump (4') which is not in operation is pressed in the direction of the run (2).

18. Method according to Claim 17, **characterized in that** a spring (17') is used as additional tensioning means (17).

19. Method according to Claim 18, **characterized in that** a helical spring (17') is used as additional tensioning means (17).

20. Method according to one of Claims 11 to 19, **characterized in that** the pump (4') is arranged in such a way that the reaction moment to the drive moment rotates the pump (4') about its rotational axis (10) such that the pump (4') is pressed in the direction of the run (2).

## Revendications

1. Système (1) comprenant un lien sans fin (2) d'un moyen d'entraînement (3) et une pompe (4') entraînée par ce lien sans fin (2), notamment pour une utilisation dans un moteur à combustion interne (15), le lien sans fin (2) se trouvant en prise avec une roue d'entraînement (5) de la pompe (4') à entraîner, ladite pompe (4') étant disposée de façon à pouvoir tourner autour d'un axe de rotation (10), c'est-à-dire à pouvoir être pivotée en direction du lien sans fin (2) et étant pourvue d'au moins un moyen de serrage (14) qui charge la pompe (4') avec un certain couple de rotation autour de son axe de rotation (10) de telle sorte que la pompe (4') est comprimée en direction du lien sans fin (2), faisant que le lien sans fin (2) est serré, la pompe (4') étant une pompe (4') transportant un fluide d'une chambre sous basse pression (12) à une chambre sous haute pression (13) ;
**caractérisé en ce que** :
- un axe de rotation (9) d'une roue dentée de pompe (8) de la pompe (4') constitue l'axe de rotation (10) autour duquel la pompe (4') peut pivoter ; et
- l'au moins un moyen de serrage (14) est réalisé en disposant la chambre sous basse pression (12) de la pompe (4') sur le côté orienté vers le lien sans fin (2) et la chambre sous haute pression (13) sur le côté opposé au lien sans fin (2) de telle sorte que la pompe (4') se trouvant en fonctionnement est chargée, du fait de la différence de pression régnant entre la chambre sous basse pression (12) et la chambre sous haute pression (13), avec un couple de rotation comprimant la pompe (4') en direction du lien sans fin (2).

2. Système (1) selon la revendication 1, **caractérisé en ce que** le moyen d'entraînement (3) est une chaîne.

3. Système (1) selon la revendication 1, **caractérisé en ce que** le moyen d'entraînement (3) est une courroie.

4. Système (1) selon l'une quelconque des revendications précédentes, **caractérisé en ce que** la pompe (4') est une pompe à essence (4') qui transporte l'essence de la chambre sous basse pression (12) à la chambre sous haute pression (13).

5. Système (1) selon l'une quelconque des revendications 1 à 3, **caractérisé en ce que** la pompe (4') est une pompe de moyen de refroidissement qui transporte le moyen de refroidissement de la chambre sous basse pression (12) à la chambre sous haute pression (13).

6. Système (1) selon l'une quelconque des revendications précédentes, **caractérisé en ce qu'**un piston (19) chargé en fluide sous pression est disposé dans la chambre sous haute pression (13), ledit piston étant disposé de façon à pouvoir être fixe sur place par rapport au moteur à combustion interne (15) et mobile par rapport à la pompe (4'), le fluide sous pression se trouvant dans la chambre sous haute pression (13) comprimant, dans le cas d'une pompe (4') se trouvant en fonctionnement, la pompe (4') en direction du lien sans fin (2) en poussant le piston (19) vers l'extérieur hors de la chambre sous haute pression (13).

7. Système (1) selon l'une quelconque des revendications précédentes, **caractérisé en ce qu'**au moins un moyen de serrage (17) supplémentaire est prévu, ledit moyen comprimant la pompe (4') se trouvant hors fonctionnement en direction du lien sans fin (2).

8. Système (1) selon la revendication 7, **caractérisé en ce que** l'au moins un moyen de serrage (17) supplémentaire est un ressort (17').

9. Système (1) selon la revendication 8, **caractérisé en ce que** l'au moins un moyen de serrage (17) supplémentaire est un ressort à vis (17').

10. Système (1) selon l'une quelconque des revendications précédentes, **caractérisé en ce que** la pompe (4') est disposée de telle sorte que le couple de réaction fait tourner la pompe (4') autour de son axe de rotation (10) jusqu'à atteindre un couple d'entraînement tel que la pompe (4') est comprimée en direction du lien sans fin (2).

11. Procédé de serrage d'un lien sans fin (2) de moyen d'entraînement (3) qui entraîne une pompe (4'), notamment une pompe (4') de moteur à combustion interne (15), la pompe (4') étant disposée de façon à pouvoir tourner autour d'un axe de rotation (10) et étant pourvue d'au moins un moyen de serrage (14) qui charge la pompe (4') avec un couple de rotation appliqué autour de son axe de rotation (10) de façon à ce que la pompe (4') soit comprimée en direction du lien sans fin (2), faisant que le lien sans fin (2) est serré, la pompe (4') utilisée étant une pompe (4') transportant un fluide d'une chambre sous basse pression (12) à une chambre sous haute pression (13) ;
**caractérisé en ce que** :
- l'axe de rotation (10) utilisé est un axe de rotation (9) de roue dentée de pompe (8) de la pompe (4') autour duquel la pompe (4') peut pivoter ; et
- l'au moins un moyen de serrage (14) est réalisé de telle sorte que la chambre sous basse pression (12) de la pompe (4') est disposée sur le côté orienté vers le lien sans fin (2) et la chambre sous haute pression (13) est disposée sur le côté opposé au lien sans fin (2), de sorte que la pompe (4') se trouvant en fonctionnement est chargée avec un certain couple de rotation en raison de la différence de pression régnant entre la chambre sous basse pression (12) et la chambre sous haute pression (13) et que la pompe (4') est comprimée en direction du lien sans fin (2).

12. Procédé selon la revendication 11, **caractérisé en ce que** le moyen d'entraînement (3) utilisé est une chaîne.

13. Procédé selon la revendication 11, **caractérisé en ce que** le moyen d'entraînement (3) utilisé est une courroie.

14. Procédé selon l'une quelconque des revendications 11 à 13, **caractérisé en ce que** la pompe (4') utilisée est une pompe à essence (4').

15. Procédé selon l'une quelconque des revendications 11 à 13, **caractérisé en ce que** la pompe (4') utilisée est une pompe de moyen de refroidissement.

16. Procédé selon l'une quelconque des revendications 11 à 15, **caractérisé en ce qu'**un piston (19) chargé en fluide sous pression est disposé dans la chambre sous haute pression (13), ledit piston étant disposé de façon à pouvoir être fixe sur place par rapport au moteur à combustion interne (15) et mobile par rapport à la pompe (4'), le piston (19) étant poussé, en présence d'une pompe (4') se trouvant en fonctionnement, hors de la chambre sous haute pression (13) sous l'effet du fluide sous pression se trouvant dans la chambre sous haute pression (13) et la pompe (4') étant comprimée en direction du lien sans fin (2).

17. Procédé selon l'une quelconque des revendications 11 à 16, **caractérisé en ce qu'**au moins un moyen de serrage (17) supplémentaire est prévu à travers lequel la pompe (4') se trouvant hors fonctionnement est comprimée en direction du lien sans fin (2).

18. Procédé selon la revendication 17, **caractérisé en ce que** le moyen de serrage (17) supplémentaire utilisé est un ressort (17').

19. Procédé selon la revendication 18, **caractérisé en ce que** le moyen de serrage (17) supplémentaire est un ressort à vis (17').

20. Procédé selon l'une quelconque des revendications 11 à 19, **caractérisé en ce que** la pompe (4') est disposée de telle sorte que le couple de réaction fait tourner la pompe (4') autour de son axe de rotation (10) jusqu'à atteindre un certain couple d'entraînement de telle sorte que la pompe (4') est comprimée en direction du lien sans fin (2).
